# EUROPÄISCHE PATENTSCHRIFT

(11) **EP 4 065 945 B1**
(45) Veröffentlichungstag und Bekanntmachung des Hinweises auf die Patenterteilung: **10.01.2024**
(21) Anmeldenummer: 20808293.3
(22) Anmeldetag: 06.11.2020
(51) Int. Cl.: G01M 1/02

(54) **VORRICHTUNG ZUM PNEUMATISCHEN ANTRIEB EINES ROTORS IN EINER AUSWUCHTMASCHINE UND AUSWUCHTMASCHINE MIT EINER SOLCHEN VORRICHTUNG**
DEVICE FOR PNEUMATICALLY DRIVING A ROTOR IN A BALANCING MACHINE, AND BALANCING MACHINE HAVING A DEVICE OF SAID TYPE
DISPOSITIF D'ENTRAÎNEMENT PNEUMATIQUE D'UN ROTOR DANS UNE MACHINE D'ÉQUILIBRAGE ET MACHINE D'ÉQUILIBRAGE COMPORTANT UN TEL DISPOSITIF

(30) Priorität: 27.11.2019 DE 102019132197
(43) Veröffentlichungstag der Anmeldung: 05.10.2022
(73) Patentinhaber: Schenck RoTec GmbH, 64293 Darmstadt (DE)
(72) Erfinder: SCHEURING, Julian, 64285 Darmstadt (DE); VOELZEL, Constantin, 64283 Darmstadt (DE); JAEGER, Tobias, 64673 Zwingenberg (DE); DIERBACH, Florian, 64285 Darmstadt (DE)
(74) Vertreter: Haarpatent Patentanwälte Krämer Meyer
(86) Internationale Anmeldenummer: PCT/DE2020/100954
(87) Internationale Veröffentlichungsnummer: WO 2021/104565

(56) Entgegenhaltungen:
- DE-A1-102013 102 519
- US-A1- 2016 333 888

## Beschreibung

Die Erfindung betrifft eine Vorrichtung zum pneumatischen Antrieb eines Rotors in einer Auswuchtmaschine mit wenigstens einer Antriebs- und einer Bremsdüse, die auf einer Grundplatte beabstandet zum Rotor angeordnet sind. Ferner betrifft die Erfindung eine Auswuchtmaschine mit einer solchen Vorrichtung.

Auswuchtmaschinen zum Auswuchten von Werkstücken sind vielfältig im Stand der Technik bekannt. Dabei wird in der Regel das auszuwuchtende Werkstück mittels eines geeigneten Antriebs in Rotation versetzt und sensorisch hinsichtlich auf Unwuchten untersucht. Ebenfalls bekannt sind verschiedene Antriebskonzepte, beispielsweise angetriebene Wellen, die mit dem Rotor verbunden werden, oder umlaufende Riemen, die an einem Außenumfang des Rotors angreifen.

Abgasgetriebene Turbolader haben einen Turboladerrotor, der im Betrieb sehr hohe Betriebsdrehzahlen von oft über 100.000 min erreicht und daher zur Vermeidung von zu hohen Lagerbelastungen und Geräuschen sehr genau ausgewuchtet werden muss. Der Turboladerrotor besteht in der Regel aus einer in einem Lagergehäuse gelagerten Welle, die an einem Ende ein Turbinenrad und am anderen Ende ein Verdichterrad trägt. Zum Messen der Unwucht ist es erwünscht, Turboladerrotoren mit einer im Wesentlichen der normalen Arbeitsgeschwindigkeit entsprechenden Winkelgeschwindigkeit anzutreiben. Der Antrieb erfolgt üblicherweise mittels Druckluft, die auf das Turbinenrad geleitet wird.

Aus EP 0 699 900 B1 ist eine Maschine zum Auswuchten von Turboladern bekannt, bei der das Mittelgehäuse einer von dem Turbinengehäuse und dem Verdichtergehäuse entkleidete Turbolader-Rumpfgruppe auf einem schwingfähigen Messtisch aufgespannt und an eine Schmierölleitung angeschlossen wird. Zum Antrieb des Turboladerrotors wird das Turbinenrad mit einem Druckluftstrahl angetrieben, der aus einer an eine Druckluftleitung angeschlossenen Düse austritt. Mit Hilfe eines Druckreglers kann der Luftdruck an der Düse so eingestellt werden, dass der Turboladerrotor mit einer für die Unwuchtmessung geeigneten Drehgeschwindigkeit angetrieben wird.

Ein weiterer pneumatischer Antrieb eines Rotors in einer Auswuchtmaschine ist aus DE 10 2012 102 160 B4 bekannt, bei der mithilfe einer speicherprogrammmierbaren Steuereinrichtung mit einem einstellbaren internen Regler die Antriebsleistung des Antriebs in Abhängigkeit von der Drehzahl des Rotors geregelt wird.

Des Weiteren offenbart DE 10 2005 053 786 A1 eine Verfahren zum dynamischen Messen der Unwucht eines in einem Gehäuse angeordneten und mit hoher Winkelgeschwindigkeit drehenden Rotors, wobei der Rotor in einem separaten Lagergehäuse gelagert ist.

DE 10 2013 102519 A1 beschreibt ein Verfahren, bei dem mittels einer speicherprogrammierbaren Steuereinrichtung mit einem einstellbaren internen Regler die Antriebsleistung einer Antriebsdüse in Abhängigkeit von der von einem Drehzahlgeber erfassten Drehzahl eines Turboladerrotors geregelt wird. Für die Regelung erforderliche Parameter werden durch einen Einstelllauf empirisch ermittelt. Bei dem Einstelllauf wird der Turboladerrotor mittels einer pneumatischen Bremseinrichtung gebremst, wobei die Bremsleistung der pneumatischen Bremseinrichtung mit Hilfe eines proportionalen Druckregelventils durch die Steuereinrichtung nach einer vorgegebenen oder empirisch für den Typ eines Turboladerrotors ermittelten Bremsstellgröße gesteuert wird.

US2016/333888 A1 offenbart eine Stützvorrichtung zur Unwuchtkorrektur eines gedrehten Körpers mit einem Fluidschublager zur Lagerung des Körpers.

Nachteilig bei den bekannten pneumatischen Rotorantrieben ist, dass eine große Variation an verschiedenen Rotortypen, die sich in ihrer Geometrie unterscheiden, die Verwendung von rotortypabhängiger Bauteile erforderlich macht. Dies resultiert in einem größeren Zeitaufwand beim Umrüsten der Auswuchtmaschine auf einen anderen Rotortyp. Auch der pneumatische Antrieb erfordert eine Umrüstung, da in der Regel jeder Rotortyp ein speziell auf ihn angepasstes Antriebssystem mit entsprechender Antriebsplatten erfordert.

Der Erfindung liegt die Aufgabe zugrunde, die Umrüstung einer Auswuchtmaschine durch einen universell einsetzbaren Rotorantrieb zu vereinfachen.

Gelöst wird die Aufgabe durch die Merkmale des unabhängigen Anspruchs 1.

Vorteilhafte Ausgestaltungen finden sich in den abhängigen Ansprüchen.

Die Aufgabe wird erfindungsgemäß dadurch gelöst, dass eine Vorrichtung zum pneumatischen Antreiben eines Rotors in einer Auswuchtmaschine bereitgestellt wird, mit wenigstens einer an eine Druckluftleitung anschließbaren Antriebsdüse zur Erzeugung eines Treibluftstroms, der auf den Rotor leitbar ist und mindestens einer an eine Druckluftleitung anschließbaren Bremsdüse zur Erzeugung eines Bremsluftstroms, der der Drehrichtung des Rotors entgegen gerichtet auf den Rotor leitbar ist, und mit einer zum Rotor beabstandet anordbaren Grundplatte, auf der die Düsen beweglich angeordnet sind, so dass der Abstand zwischen Düsen und Rotor einstellbar ist. Die Positionen der Düsen können in Abhängigkeit des auszuwuchtenden Rotors geändert werden, so dass eine rotortypunabhängige Einstellbarkeit der Antriebs- und Bremsdüsen erreicht wird und ein Rotorwechsel keine manuelle Umrüstung des Antriebs erfordert. Die erfindungsgemäße Vorrichtung ist universell für eine Vielzahl unterschiedlicher Rotorgeometrien verwendbar. Insbesondere ist vorgesehen, dass die Düsen auf der Grundplatte radial zur Rotorachse verschiebbar sind.

Es ist bevorzugt, dass die Grundplatte einen Durchgang aufweist, so dass die Grundplatte in einer Ebene quer zur Rotorachse zumindest teilweise um den Rotor herum anordbar ist. Der Durchgang kann insbesondere zentrisch in der Grundplatte angeordnet sein, wobei die Grundplatte eine seitliche Öffnung aufweisen kann, durch die der Rotor in die Rotoraufnahme einbringbar ist. Dem Fachmann ist bekannt, dass insbesondere pneumatisch angetriebene Rotoren, wie beispielsweise Bestandteile eines Turboladers oder einer Turbolader-Rumpfgruppe derart in einer Auswuchtmaschine gelagert werden, dass der Antrieb beabstandet zum Rotor angeordnet wird, so dass Druckluft auf die drehbaren Bestandteile führbar ist. Das heißt, der Rotor wird nicht zwangsläufig vollständig durch den Durchgang der Grundplatte geführt, sondern lediglich ein Teil des Rotors oder der Rotoraufnahme und zwar derart, dass die auf der Grundplatte angeordneten Düsen beabstandet zum Rotor anordbar sind und ein Antrieb des Rotors gewährleistet wird.

Um die Einstellbarkeit und die Handhabung der Vorrichtung weiter zu verbessern, kann vorgesehen sein, dass die Grundplatte entlang der Rotorachse axial verschiebbar ist. Das heißt, die Grundplatte ist insbesondere höhenverstellbar. Die Grundplatte kann zur Beladung der Auswuchtmaschine mit dem Rotor in eine Beladeposition gefahren werden, in der eine einfache und schnelle Beladung der Auswuchtmaschine mit dem Rotor möglich ist. Nach dem Beladen kann die Grundplatte in die Antriebsposition gefahren werden, in der ein Antrieb des Rotors erreichbar ist.

Die Verschiebung der Grundplatte kann händisch über einfache Verschiebemittel, wie beispielsweise Schienen erfolgen. Es kann jedoch auch vorgesehen sein, dass die Grundplatte mithilfe eines Elektromotors entlang der Rotorachse automatisch axial verfahrbar ist.

Die Handhabung der Grundplatte kann ferner dadurch verbessert werden, dass die Grundplatte mindestens zwei Grundplattenteile umfasst, die jeweils mindestens eine Düse tragen und zur Formung der Grundplatte miteinander verbindbar sind. Die Grundplattenteile können beispielsweise mittels Verschraubungen miteinander verbunden werden. Dies kann beispielsweise für die Beladung der Auswuchtmaschine vorteilhaft sein und auch die Wartung des Antriebs oder den Austausch einzelner Bauteile vereinfachen.

Ferner kann vorgesehen sein, dass mindestens ein Grundplattenteil gelenkig mit einem weiteren Grundplattenteil verbindbar ist. Das gelenkige und somit schwenkbare Grundplattenteil kann für die Beladung der Auswuchtmaschine in eine Position bewegt werden, in der eine einfache Beladung möglich ist.

Die Beweglichkeit der Düsen auf der Grundplatte kann in einer Ausgestaltung dadurch erreicht werden, dass jeweils eine Düse, insbesondere als Bestandteil einer Antriebseinheit, auf einem Schlitten angeordnet ist, der auf einer, auf der Oberseite der Grundplatte befestigten Schiene, verfahrbar ist. Die Düsen können mitsamt dem Schlitten auf der Grundplatte bewegt und in eine Position verfahren werden, in der Druckluft auf den Rotor führbar ist. Insbesondere ist bevorzugt, dass die Schlitten mit den Düsen radial zur Rotorachse verfahrbar sind.

Die Schlitten können auf den Schienen beispielsweise händig verschoben werden, wobei es vorteilhaft sein kann, wenn an den Schienen definierte Positionen vorgesehen sind, an denen der Schlitten mittels Haltevorrichtungen arretierbar ist. Die Positionen entsprechen vorzugsweise Positionsdaten der Düsen, in denen ein optimaler Antrieb eines Rotortyps erreicht wird und die beispielsweise empirisch ermittelt wurden. Die Schlitten mit den Düsen können hierdurch in einfacher Weise in Abhängigkeit des auszuwuchtenden und in die Auswuchtmaschine eingeladenen Rotors und dessen Rotorgeometrie händisch positioniert werden.

Es kann jedoch auch vorgesehen sein, dass an jeweils einem Schlitten ein Elektromotor angeordnet ist, der den Schlitten auf den Schienen bewegt. Die Position des Schlittens und somit der Düse relativ zu einem Rotortyp ist vorzugsweise in einem Datenspeicher hinterlegt und wird beim Wechsel des Rotors ausgelesen, so dass der Elektromotor, zum Beispiel ein Linearmotor, den Schlitten an die vordefinierte Position verfährt.

In einer weiteren Ausgestaltung ist vorgesehen, dass jeweils an einem Schlitten eine Zahnstange vorgesehen ist, die mit einem beabstandet zu der Zahnstange angeordneten und sich um seine Achse drehbaren Zahnrad in Eingriff bringbar ist. Aufgrund der Verzahnung des Zahnrades mit der Zahnstange, bewirkt eine Drehung des Zahnrades eine Bewegung des Schlittens mit der Düse, so dass der Abstand zwischen Düse und Rotor einstellbar ist. Das Zahnrad kann hierbei händisch bewegt werden. Es kann jedoch auch vorgesehen sein, dass jeweils ein Elektromotor an einem Zahnrad zur Drehung des Zahnrades vorgesehen ist, so dass die Bewegung des Schlittens mit der Düse automatisch erfolgt. Diesbezüglich ist es vorteilhaft, wenn die Positionsdaten der Düsen für einen Rotortyp in einem Datenspeicher hinterlegt sind und beim Wechsel des Rotors automatisch eingelesen werden, so dass die Düsen in Abhängigkeit vom Rotortyp in ihrer Position verändert werden.

Die Erfindung betrifft ferner eine Auswuchtmaschine mit einer Rotoraufnahme zur Lagerung des Rotors, einer Vorrichtung gemäß der vorherigen Ausführungen zum pneumatischen Antreiben des Rotors und einer Messvorrichtung zur Messung der Rotorunwucht, wobei die auf der Grundplatte angeordneten Düsen derart beabstandet zum Rotor positionierbar sind, dass ein von wenigstens einer Antriebsdüse erzeugbare Treibluftstrom auf den Rotor leitbar ist und ein von mindestens einer Bremsdüse erzeugbare Bremsluftstrom, der der Drehrichtung des Rotors entgegen gerichtet ist, auf den Rotor leitbar ist. Die Düsen zum Antrieb des Rotors können insbesondere automatisch in Abhängigkeit der Rotorgeometrie bzw. des Rotortyps in ihrer Position geändert werden, indem die Düsen auf der Grundplatte, insbesondere radial zur Rotorachse bewegt werden, so dass der Abstand zwischen Düsen und Rotor einstellbar ist. Hierdurch wird eine rotortypspezifische Zuführung von Druckluft auf den Rotor gewährleistet. Um eine schnelle und einfache Einstellung der Düsen zu erreichen, kann es vorteilhaft sein, dass rotorspezifische Positionsdaten der Düsen in einem Datenspeicher hinterlegbar sind und von der Auswuchtmaschine automatisch zur Einstellung der Düsenpositionen abrufbar sind. Im Übrigen wird auf die obigen Gestaltungen und Ausführungen verwiesen, die analog für die Auswuchtmaschine gelten.

Die Erfindung wird nachfolgend anhand eines Ausführungsbeispiels der Erfindung näher erläutert, das in der Zeichnung dargestellt ist.

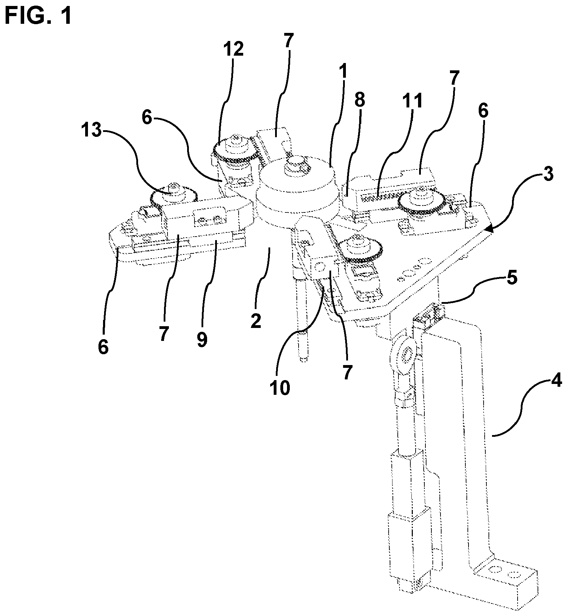

Figur 1 zeigt einen Ausschnitt eines pneumatischen Antriebs in einer Auswuchtmaschine. Ein in der Zeichnung angedeuteter Rotor 1 ist in einer ebenfalls angedeuteten Rotoraufnahme in der Auswuchtmaschine gelagert. Zumindest teilweise um den Rotor 1 herum ist eine, einen zur zumindest teilweisen Durchführung des Rotors 1 vorgesehenen Durchgang 2 aufweisenden Grundplatte 3 angeordnet. Die Grundplatte 3 ist insbesondere in einer Ebene senkrecht zur Rotorachse angeordnet.

Die Grundplatte 3 kann verschiedene geometrische Formen aufweisen und beispielsweise, wie in der Figur 1 angedeutet, plattenförmig ausgestaltet sein und sich teilweise um den Rotor 1 herum legen. Zu einer Seite des Rotors 1 hin ist die Grundplatte 3 offen. Unterhalb der Grundplatte 3 ist eine Haltevorrichtung 4 zur Halterung der Grundplatte 3 und eine hieran angeordnete Verschiebevorrichtung 5 vorgesehen, mit der die Grundplatte 3 höhenverstellbar ist und axial entlang der Rotorachse bewegbar ist. Die Verschiebevorrichtung 5 kann beispielsweise aus einer Schienen- oder Schlittenkonstruktion bestehen, mithilfe der eine händische Verschiebbarkeit der Grundplatte 3 ermöglicht wird. Es kann jedoch auch ein Elektromotor vorgesehen sein, mit dem die Grundplatte 3 zum Beispiel auf Schienen axial entlang der Rotorachse verschiebbar ist. Die Einstellung der Position der Grundplatte 3 kann somit automatisch erfolgen.

Die Grundplatte 3 kann ferner mehrteilig ausgestaltet sein, wobei einzelne Grundplattenteile 6 mittels Verschraubungen miteinander verbunden werden können. Des weiteren können Grundplattenteile 6 über Gelenke miteinander verbunden sein, so dass einzelne Grundplattenteile 6 schwenkbar sind. Es kann jedoch auch bevorzugt sein, dass die Grundplatte 3 einteilig hergestellt ist und beispielsweise aus Metall, verstärktem Kunststoff oder einer Kombination hieraus besteht.

Auf der Grundplatte 3 sind Antriebseinheiten 7 angeordnet, die entweder Antriebsdüsen oder Bremsdüsen umfassen. Die Düsen 8 sind derart ausgestaltet, dass eine über Druckluftleitungen den Düsen 8 zugeführte Druckluft auf drehbare und zum Antrieb des Rotors 1 vorgesehene Bauteile des Rotors 1 blasbar ist. Die Druckluftleitungen und die für die Steuerung der Druckluftzufuhr notwendigen Ventile, die neben den Düsen 8 Bestandteile einer Antriebseinheit 7 sind, sind nicht in Figur 1 gezeigt. Je nach Bedarf kann der Antrieb mit zwei oder mehr Düsen 8 ausgestattet sein. Die Düsen sind in Figur 1 nur schematisch dargestellt, aber derart ausgestaltet, dass beispielsweise zwei Antriebsdüsen den Rotor 1 mithilfe von Druckluft in eine Richtung und zwei Bremsdüsen den Rotor 1 in die entgegengesetzte Richtung bewegen können, indem die Antriebsdüsen und Bremsdüsen den Rotor 1 aus unterschiedlichen Richtungen anblasen.

Die Antriebseinheiten 7, das heißt insbesondere die Düsen 8 sind auf der Grundplatte 3 beweglich angeordnet, so dass der radiale Abstand zwischen den Düsen 3 und dem Rotor 1 veränderbar ist. Dies kann dadurch erreicht werden, wie in Figur 1 dargestellt, indem die Düsen 8 oder die Antriebseinheiten 7 auf einem Schlitten 9 angeordnet sind, der auf einer Schiene oder mehreren Schienen 10 beweglich gelagert ist. Die Bewegung eines Schlittens 9 auf einer Schiene 10 und somit die Positionierung der Düse 8 kann beispielsweise dadurch erreicht werden, indem der Schlitten 9 händig auf den Schienen 10 bewegt und in einer definierten Position arretiert wird.

In Figur 1 ist eine Ausgestaltung gezeigt, bei der jeweils ein Schlitten 9 eine Zahnstange 11 aufweist, die mit einem beabstandet zur Zahnstange 11 angeordneten Zahnrad 12 in Eingriff bringbar ist. Das Zahnrad 12 kann mit einem Elektromotor 13, zum Beispiel einem Servomotor drehend angetrieben werden. Durch die Verzahnung von Zahnrad 12 und Zahnstange 11 wird durch eine Drehung des Zahnrades 12 eine Vorwärts- oder Rückwärtsbewegung des Schlittens 9 erreicht, was in einer Änderung des radialen Abstandes zwischen Düse 8 und Rotor 1 resultiert.

Zur Messung einer Unwucht eines pneumatisch antreibbaren Rotors 1 wird der Rotor 1 in die entsprechende Aufnahme der Auswuchtmaschine eingespannt. Anschließend wird die Grundplatte 3 manuell oder automatisch in Position verfahren, in der ein zum Antrieb des Rotors 1 notwendiger Abstand zwischen Düsen 8 und Rotor 1 vorliegt. Die rotortypabhängigen Positionsdaten der Düsen 8 und/oder der Grundplatte 3 sind vorzugsweise in einem Datenspeicher der Auswuchtmaschine gespeichert und können nach Beladen des Rotors 1 ausgelesen werden. Das heißt, auch die rotortypabhängige Position der Grundplatte 3 kann im Datenspeicher hinterlegt und bei Rotorwechsel automatisch ausgelesen und zur Einstellung der Grundplatte 3 verwendet werden. Nachdem die Grundplatte 3 in Position gebracht ist oder gleichzeitig hierzu erfolgt eine Positionierung der Düsen 8, indem die Schlitten 9 an die rotortypabhängige Position verfahren werden. Das heißt, der radiale Abstand zwischen Düsen 8 und Rotor 1 verändert wird. In dieser definierten Position der Düsen 8 ist eine optimale Führung von Druckluft von den Düsen 8 auf den Rotor 1, insbesondere dessen pneumatisch antreibbaren Bestandteile möglich. Sofern ein sehr schneller Hochlauf des Rotors 1 auf Arbeitsdrehzahl oder eine sogar hierüber liegende Drehzahl gewünscht ist, kann über ein Druckregelventil lediglich die Antriebsdüse mit Druckluft versorgt werden, so dass mit höherem Druck und ohne Bremswirkung der Bremsdüse ein sehr schneller Hochlauf erreicht wird. Andernfalls werden sowohl die Antriebsdüse als auch die Bremsdüse mit Druckluft versorgt, wobei über entsprechende Ventile die Düsen 8 derart mit Druckluft versorgt werden, dass die Antriebsleistung der Antriebsdüse die Bremsleistung der Bremsdüse erheblich übersteigt, so dass der Rotor 1 kontinuierlich bis zu einer vorgegebenen Solldrehzahl beschleunigt wird. Nach Messung einer Unwucht durch eine oder mehrere Messvorrichtungen wird der Rotor 1 durch die Bremsdüse kontinuierlich bis zum Stillstand abgebremst.

Die erfindungsgemäße Vorrichtung stellt eine Kombination aus einem pneumatischen Antrieb und dessen mechanische Kopplung zur automatischen Einstellbarkeit der Anblasposition dar. Hieraus ergeben sich zahlreiche Vorteile. Unter anderem entfällt die Notwendigkeit, für jeden Rotortyp ein spezielles auf den Rotortyp angepasstes Antriebssystem konstruieren zu müssen. Es ist mit der erfindungsgemäßen Vorrichtung möglich, eine große Vielfalt an Rotortypen abzudecken, so dass das Umrüsten eines Antriebs einer Auswuchtmaschine beim Wechsel des Rotortyps nicht mehr nötig ist.

## Patentansprüche

1. Vorrichtung zum pneumatischen Antreiben eines Rotors (1) in einer Auswuchtmaschine mit wenigstens einer an eine Druckluftleitung anschließbaren Antriebsdüse (8) zur Erzeugung eines Treibluftstroms, der auf den Rotor (1) leitbar ist und mindestens einer an eine Druckluftleitung anschließbaren Bremsdüse (8) zur Erzeugung eines Bremsluftstroms, der der Drehrichtung des Rotors (1) entgegen gerichtet auf den Rotor (1) leitbar ist, **dadurch gekennzeichnet, dass** die Vorrichtung eine zum Rotor (1) beabstandet anordbaren Grundplatte (3) umfasst, auf der die Düsen (8) beweglich angeordnet sind, so dass der Abstand zwischen Düsen (8) und Rotor (1) einstellbar ist.

2. Vorrichtung nach Anspruch 1, **dadurch gekennzeichnet, dass** die Grundplatte (3) einen Durchgang (2) aufweist, so dass die Grundplatte (3) in einer Ebene quer zur Rotorachse zumindest teilweise um den Rotor (1) herum anordbar ist.

3. Vorrichtung nach einem der vorhergehenden Ansprüche, **dadurch gekennzeichnet, dass** die Grundplatte (3) mindestens zwei miteinander verbindbare Grundplattenteile (6) umfasst, die jeweils mindestens eine der Düsen (8) tragen.

4. Vorrichtung nach Anspruch 3, **dadurch gekennzeichnet, dass** mindestens ein Grundplattenteil (6) gelenkig mit einem weiteren Grundplattenteil (6) verbindbar ist.

5. Vorrichtung nach einem der vorhergehenden Ansprüche, **dadurch gekennzeichnet, dass** die Düsen (8) auf der Grundplatte (3) radial zur Rotorachse verschiebbar sind.

6. Vorrichtung nach einem der vorhergehenden Ansprüche, **dadurch gekennzeichnet, dass** jeweils eine der Düsen (8) auf einem Schlitten (9) angeordnet ist, der auf einer auf der Oberseite der Grundplatte (3) befestigten Schiene (10) verfahrbar ist.

7. Vorrichtung nach Anspruch 6, **dadurch gekennzeichnet, dass** an den Schienen (10) definierte Positionen vorgesehen sind, an denen der Schlitten (9) mittels Haltevorrichtungen arretierbar ist.

8. Vorrichtung nach Anspruch 6, **dadurch gekennzeichnet, dass** jeweils an dem Schlitten (9) ein Elektromotor angeordnet ist, der den Schlitten (9) auf den Schienen (10) bewegt.

9. Vorrichtung nach Anspruch 6, **dadurch gekennzeichnet, dass** jeweils an dem Schlitten (9) eine Zahnstange (11) vorgesehen ist, die mit einem beabstandet zu der Zahnstange (11) angeordneten und sich um seine Achse drehbaren Zahnrad (12) in Eingriff bringbar ist.

10. Vorrichtung nach Anspruch 9, **dadurch gekennzeichnet, dass** jeweils ein Elektromotor (13) an dem Zahnrad (12) zur Drehung des Zahnrades (12) vorgesehen ist.

11. Auswuchtmaschine mit einer Rotoraufnahme zur Lagerung des Rotors (1), einer Vorrichtung gemäß der vorherigen Ansprüche 1 bis 10 zum pneumatischen Antreiben des Rotors (1) und einer Messvorrichtung zur Messung der Rotorunwucht, wobei die auf der Grundplatte (3) angeordneten Düsen (8) derart beabstandet zum Rotor (1) positionierbar sind, dass der von der wenigstens einen Antriebsdüse (8) erzeugbare Treibluftstrom auf den Rotor (1) leitbar ist und der von der mindestens einen Bremsdüse (8) erzeugbare Bremsluftstrom, der der Drehrichtung des Rotors (1) entgegen gerichtet ist, auf den Rotor (1) leitbar ist.

12. Auswuchtmaschine nach Anspruch 11, **dadurch gekennzeichnet, dass** der radiale Abstand zwischen Düsen (8) und Rotor (1) automatisch in Abhängigkeit von dem jeweiligen Rotortyp einstellbar ist.

13. Auswuchtmaschine nach einem der Ansprüche 11 oder 12, **dadurch gekennzeichnet, dass** rotorspezifische Positionsdaten der Düsen (8) in einem Datenspeicher hinterlegbar sind und von der Auswuchtmaschine automatisch zur Einstellung der Düsenpositionen abrufbar sind.

14. Auswuchtmaschine nach einem der Ansprüche 11 bis 13, **dadurch gekennzeichnet, dass** die Grundplatte (3) entlang der Rotorachse axial verschiebbar ist.

15. Auswuchtmaschine nach Anspruch 14, **dadurch gekennzeichnet, dass** die Grundplatte (3) mithilfe eines Elektromotors entlang der Rotorachse automatisch axial verfahrbar ist.

## Claims

1. Device for pneumatically driving a rotor (1) in a balancing machine, having at least one drive nozzle (8), which is connectable to a compressed-air line and which serves for generating a driving air stream which can be directed onto the rotor (1), and at least one braking nozzle (8), which is connectable to a compressed-air line and which serves for generating a braking air flow which can be directed onto the rotor (1) in a direction opposite to the direction of rotation of the rotor (1), **characterised in that** said device also having a base plate (3) which is arrangeable with a spacing to the rotor (1) and on which the nozzles (8) are movably arranged, such that the spacing between the nozzles (8) and the rotor (1) is adjustable.

2. Device according to claim 1, **characterised in that** the base plate (3) has a passage (2), such that the base plate (3) is arrangeable at least in part around the rotor (1) in a plane transverse to the rotor axis.

3. Device according to either of the preceding claims, **characterised in that** the base plate (3) comprises at least two base plate parts (6) which are connectable to one another and which each carry at least one of the nozzles (8).

4. Device according to claim 3, **characterised in that** at least one base plate part (6) is connectable in an articulated manner to a further base plate part (6).

5. Device according to any of the preceding claims, **characterised in that** the nozzles (8) on the base plate (3) can be displaced radially to the rotor axis.

6. Device according to any of the preceding claims, **characterised in that** each one of the nozzles (8) is arranged on a carriage (9) which can be moved on a rail (10) fixed on the upper side of the base plate (3).

7. Device according to claim 6, **characterised in that** defined positions are provided on the rails (10), at which positions the carriage (9) can be locked by means of holding devices.

8. Device according to claim 6, **characterised in that** an electric motor is arranged on each carriage (9), which electric motor moves the carriage (9) on the rails (10).

9. Device according to claim 6, **characterised in that** a rack (11) is provided on each carriage (9) and can be brought into engagement with a gear wheel (12) which is arranged with a spacing to the rack (11) and is rotatable about the axis of said gear wheel.

10. Device according to claim 9, **characterised in that** an electric motor (13) is provided on each gear wheel (12) for rotating the gear wheel (12).

11. Balancing machine having a rotor receptacle for mounting the rotor (1), a device according to the preceding claims 1 to 10 for pneumatically driving the rotor (1), and a measuring device for measuring the rotor unbalance, wherein the nozzles (8) arranged on the base plate (3) can be positioned with a spacing to the rotor (1) in such a way that the driving air stream which can be generated by the at least one drive nozzle (8) can be directed onto the rotor (1), and the braking air flow which can be generated by the at least one braking nozzle (8) can be directed onto the rotor (1) in a direction opposite to the direction of rotation of the rotor (1).

12. Balancing machine according to claim 11, **characterised in that** the radial spacing between the nozzles (8) and the rotor (1) is automatically adjustable depending on the particular rotor type.

13. Balancing machine according to either of claims 11 or 12, **characterised in that** rotor-specific position data for the nozzles (8) can be stored in a data memory and can be called up automatically by the balancing machine for adjusting the nozzle positions.

14. Balancing machine according to any of claims 11 to 13, **characterised in that** the base plate (3) can be displaced axially along the rotor axis.

15. Balancing machine according to claim 14, **characterised in that** the base plate (3) can be automatically moved axially along the rotor axis with the aid of an electric motor.

## Revendications

1. Dispositif pour l'entraînement pneumatique d'un rotor (1) dans une machine d'équilibrage avec au moins une buse d'entraînement (8) pouvant être raccordée à une conduite d'air comprimé pour produire un flux d'air d'entraînement qui peut être dirigé sur le rotor (1), et avec au moins une buse de freinage (8) pouvant être raccordée à une conduite d'air comprimé pour produire un flux d'air de freinage qui peut être dirigé sur le rotor (1) dans le sens opposé au sens de rotation du rotor (1), **caractérisé en ce que** le dispositif comprend une plaque de base (3) pouvant être disposée à distance du rotor (1) et sur laquelle les buses (8) sont disposées de manière mobile, de sorte que la distance entre les buses (8) et le rotor (1) peut être réglée.

2. Dispositif selon la revendication 1, **caractérisé en ce que** la plaque de base (3) comprend un passage (2), de sorte que la plaque de base (3) peut être disposée au moins partiellement autour du rotor (1) dans un plan transversal à l'axe du rotor.

3. Dispositif selon l'une des revendications précédentes, **caractérisé en ce que** la plaque de base (3) comprend au moins deux parties de plaque de base (6) pouvant être reliées entre elles et portant chacune au moins l'une des buses (8).

4. Dispositif selon la revendication 3, **caractérisé en ce qu'**au moins une partie de plaque de base (6) peut être reliée de manière articulée à une autre partie de plaque de base (6).

5. Dispositif selon l'une des revendications précédentes, **caractérisé en ce que** les buses (8) peuvent être déplacées sur la plaque de base (3) radialement par rapport à l'axe du rotor.

6. Dispositif selon l'une des revendications précédentes, **caractérisé en ce que** chacune des buses (8) est disposée sur un chariot (9) qui peut se déplacer sur un rail (10) fixé sur la face supérieure de la plaque de base (3).

7. Dispositif selon la revendication 6, **caractérisé en ce que** des positions définies sont prévues sur les rails (10), dans lesquelles le chariot (9) peut être bloqué au moyen de dispositifs de retenue.

8. Dispositif selon la revendication 6, **caractérisé en ce qu'**un moteur électrique est disposé sur chaque chariot (9), lequel déplace le chariot (9) sur les rails (10).

9. Dispositif selon la revendication 6, **caractérisé en ce qu'**une crémaillère (11) est prévue sur chaque chariot (9), laquelle crémaillère peut être mise en prise avec une roue dentée (12) disposée à distance de la crémaillère (11) et pouvant tourner autour de son axe.

10. Dispositif selon la revendication 9, **caractérisé en ce qu'**un moteur électrique (13) est prévu sur chaque roue dentée (12) pour faire tourner la roue dentée (12).

11. Machine d'équilibrage comprenant un logement de rotor pour loger le rotor (1), un dispositif selon les revendications précédentes 1 à 10 pour l'entraînement pneumatique du rotor (1) et un dispositif de mesure pour mesurer le balourd du rotor, les buses (8) disposées sur la plaque de base (3) pouvant être positionnées à une distance telle du rotor (1), que le flux d'air d'entraînement pouvant être généré par ladite au moins une buse d'entraînement (8) peut être dirigé sur le rotor (1) et que le flux d'air de freinage pouvant être généré par ladite au moins une buse de freinage (8), et qui est dirigé dans le sens opposé au sens de rotation du rotor (1), peut être dirigé sur le rotor (1).

12. Machine d'équilibrage selon la revendication 11, **caractérisée en ce que** la distance radiale entre les buses (8) et le rotor (1) peut être réglée automatiquement en fonction du type de rotor concerné.

13. Machine d'équilibrage selon l'une des revendications 11 ou 12, **caractérisée en ce que** les données de position des buses (8) spécifiques au rotor peuvent être enregistrées dans une mémoire de données et peuvent être consultées automatiquement par la machine d'équilibrage pour régler les positions des buses.

14. Machine d'équilibrage selon l'une des revendications 11 à 13, **caractérisée en ce que** la plaque de base (3) peut être déplacée axialement le long de l'axe du rotor.

15. Machine d'équilibrage selon la revendication 14, **caractérisée en ce que** la plaque de base (3) peut être déplacée axialement de manière automatique le long de l'axe du rotor à l'aide d'un moteur électrique.
